# EUROPEAN PATENT SPECIFICATION

(11) **EP 2 881 238 B1**
(45) Date of publication and mention of the grant of the patent: **05.01.2022**
(21) Application number: 14191457.2
(22) Date of filing: 03.11.2014
(51) Int. Cl.: B29C 70/08, B29C 65/02, B29D 99/00, B29C 70/38, B29C 70/76, B29C 65/00, B29C 65/16, B64C 1/00, B64C 1/06, B29C 65/08

(54) **AEROSPACE STRUCTURAL MEMBER WITH HYBRID COMPOSITE STRUCTURE**
LUFT- UND RAUMFAHRT-STRUKTURELEMENT MIT HYBRIDER VERBUNDSTRUKTUR
ÉLÉMENT STRUCTURAL AÉROSPATIAL À STRUCTURE COMPOSITE HYBRIDE

(30) Priority: 03.12.2013 US 201314095693
(43) Date of publication of application: 10.06.2015
(73) Proprietor: The Boeing Company, Chicago, IL 60606-1596 (US)
(72) Inventor: Fisher, Edward M, Chicago, IL 60606-2016 (US); Blom, Adriana W, Chicago, IL 60606-2016 (US)
(74) Representative: Boult Wade Tennant LLP

(56) References cited:
- EP-A1- 0 344 721
- EP-A1- 1 849 588
- EP-A2- 1 745 914
- US-A1- 2004 062 915
- US-A1- 2013 309 001

## Description

### BACKGROUND

In the aircraft and other industries, composite structures such as beams and stiffeners are fabricated using thermoset prepreg tape layup techniques, and autoclave curing. Bandwidths of prepreg tape or tows are laid up side-by-side to form a multi-ply laminate that is vacuum bagged and autoclave cured. In some applications where the structure requires connection at load input locations, custom metal fittings are separately machined and then fastened to the laminate structure. Laminate structures such as beams are formed by assembling two or more composite laminate components. Due to the geometry of the components, gaps or cavities may be present in joints between the components. In order to strengthen these joints, fillers, sometimes referred to as "noodles", must be installed in the joints.

The composite laminate fabrication process described above is time-consuming, labor intensive and requires expensive capital equipment such as automatic fiber placement machines. In some cases, these composite laminate structures may be heavier than desired because of the need for ply reinforcements in certain areas of the parts. Moreover, the need for fillers increases fabrication costs and may not provide sufficient strengthening of joints for some applications.

Accordingly, there is a need for a method of producing composite structures that reduces the need for prepreg tape layup, and which eliminates joints in the structure that require fillers. There is also a need for composite structures that can be produced more easily and economically, while maintaining the required strength and allowing integration of fittings or other special features.

EP 1,745,914, in accordance with its abstract, describes a composite structure comprising first component(s) bonded to second component(s), all components being of bonded fiber composite with a thermoplastic matrix, the second component having a supporting region of endless fiber-reinforced material and a flange region of staple fiber-reinforced material, via which the second component is bonded to the first.

EP 1,849,588 A1, in accordance with its abstract, describes a reinforced composite part comprising a main part and at least one reinforcement in the form of a fibre part produced by diverse winding processes or direct application processes of unidirectional and continuous fibre-based filaments. The fibre part can be separately wound and then either receive the main part by overmoulding or be mounted onto a pre-fabricated main part. Alternatively, the fibre part can also be produced by a direct application of fibre-based filament onto a mould or onto the main part itself.

EP 0,344,721 A1, in accordance with its abstract, states a technique is provided for forming frame portions from thermoplastic resin prepregs containing randomly arranged reinforcing fibers directly at predetermined location(s) upon a preformed wall portion and simultaneously bonding such frame portions directly to such wall portion at such location (s) . The wall portion is itself a laminate derived from thermoplastic resin prepregs containing ordered, substantially continuous reinforcing fibers.

US 2013/309001, in accordance with its abstract, states there is provided a joint body including: a reinforcing member having at least one random layer in which a chopped carbon fiber is randomly oriented in a thermoplastic resin, and at least one unidirectional material layer in which a continuous carbon fiber is uni-directionally arranged in a thermoplastic resin; and a reinforced member with an open sectional shape having at least one selected from the group consisting of a random layer and a unidirectional material layer, wherein the reinforcing member and the reinforced member are vibration-welded to form a hollow closed section.

US 2004/062915, in accordance with its abstract, discloses reinforced composite structural members which are formed by bonding reinforcing sections to predetermined areas on the outside surface of a hollow profile formed from a thermoplastic resin cellulosic fiber composite material, where the predetermined areas are located substantially away from the center of mass of the composite profile. The reinforcing sections have a higher modulus than the composite material used to form the hollow profile.

### SUMMARY

There is described herein a method according to claim 1 of manufacturing a composite aerospace structural member comprising a unitary beam that includes a central web, a pair of flanges integral with the central web and forming an I-shaped cross-section, and a laminated composite cap that covers and is co-welded to each of the pair of flanges, and a pair of fittings on opposite ends of the unitary beam that are formed integral with the web and the pair of flanges. The method comprises molding a thermoplastic resin first component reinforced with discontinuous fibers by compression molding a flowable mixture of a thermoplastic resin and discontinuous, randomly oriented fibers. The thermoplastic resin first component comprises the unitary beam. The method further comprises laying up a thermoplastic resin second component reinforced with substantially continuous fibers, wherein the thermoplastic resin second component comprises the laminated composite caps.

The method further comprises co-welding the thermoplastic resin first and second components.

There is also described herein a hybrid composite aerospace structural member according to claim 11 . The structural member comprises a first thermoplastic resin component reinforced with discontinuous fibers comprising a compression molded unitary beam that includes a central web, a pair of flanges integral with the central web, forming an I-shaped cross-section and a pair of fittings on opposite ends of the unitary beam that are formed integral with the central web and the pair of flanges.

The structural member also comprises a second thermoplastic resin component reinforced with continuous fibers and comprising a laminated composite cap joined to at least one of the flanges.

### BRIEF DESCRIPTION OF THE DRAWINGS

The claimed invention is set forth in the appended claims. The illustrative embodiments, however, as well as a preferred mode of use, further objectives and advantages thereof, will best be understood by reference to the following detailed description of an illustrative embodiment of the present disclosure when read in conjunction with the accompanying drawings, wherein:
Figure 1 is an illustration of a perspective view of a hybrid composite structure having integrated fittings produced according to the disclosed method.
Figure 2 is an illustration of an exploded, perspective view of the hybrid structure of Figure 1.
Figure 3 is an illustration of a sectional view taken along the line 3-3 in Figure 1.
Figure 4 is an illustration of the area designated as FIG. 4 in Figure 3.
Figure 5 is an illustration of a plan view of a thermoplastic prepreg flake.
Figure 6 is an illustration of a perspective view of an automatic fiber placement machine laying up a cap on a molded composite flange.
Figure 7 is an illustration of a diagrammatic side view of a continuous compression molding machine.
Figure 8 is an illustration of a perspective view of a contoured, hybrid composite hat stringer that is not in the scope of the appended claims.
Figure 9 is an illustration of a perspective view of a contoured, hybrid composite frame member that is not in the scope of the appended claims.
Figure 10 is an illustration of a flow diagram of a method of producing hybrid composite structures.
Figure 11 is an illustration of a flow diagram illustrating additional details of the disclosed method.
Figure 12 is an illustration of a flow diagram of aircraft production and service methodology.
Figure 13 is an illustration of a block diagram of an aircraft.

### DETAILED DESCRIPTION

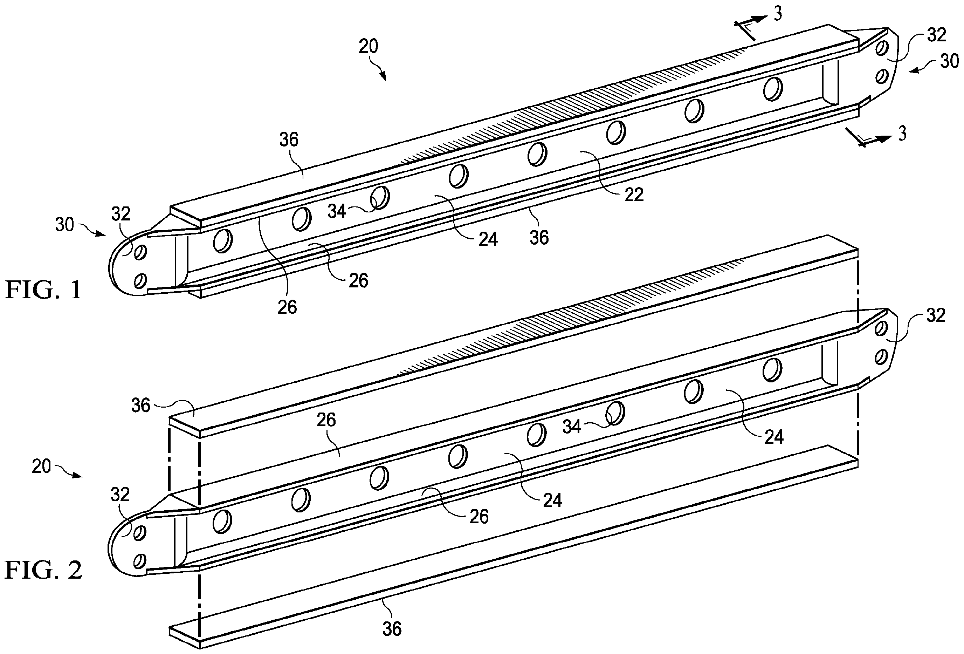

Referring first to Figures 1 and 2, a hybrid composite structure 20 broadly comprises a molded first composite component 22 and a laminated second component 36 for strengthening and stiffening the first component 22. In the exemplar, the first component 22 comprises a unitary beam 22 formed of a molded, thermoplastic composite ("TPC") material, however as will be discussed later, the first component 22 may have one or more curves or contours along their length. The second component 36 comprises a TPC cap 36 joined with the beam 22.

The beam 22 includes a pair of flanges 26 connected by a central web 24, forming an I-shaped cross-section. Web 24 may include one or more lightening holes 34 to reduce the weight of the beam 22. The beam 22 also includes a pair of fittings 30 on opposite ends thereof. In the illustrated example, the fittings 30 comprise TPC lugs 32 that are formed integral with the web 24 and the flanges 26. The illustrative lugs 32 are, however merely illustrative of a wide variety of fittings and features that may be formed integral with the beam 22 using molding techniques described below. Moreover, the fittings 30 may comprise metal fittings that are co-molded with the TPC web 24 and TPC flanges 26. The TPC cap 36 is a laminate that covers and is co-welded to each of the flanges 26. The TPC laminate caps 36 function to stiffen and strengthen the molded TPC beam 22.

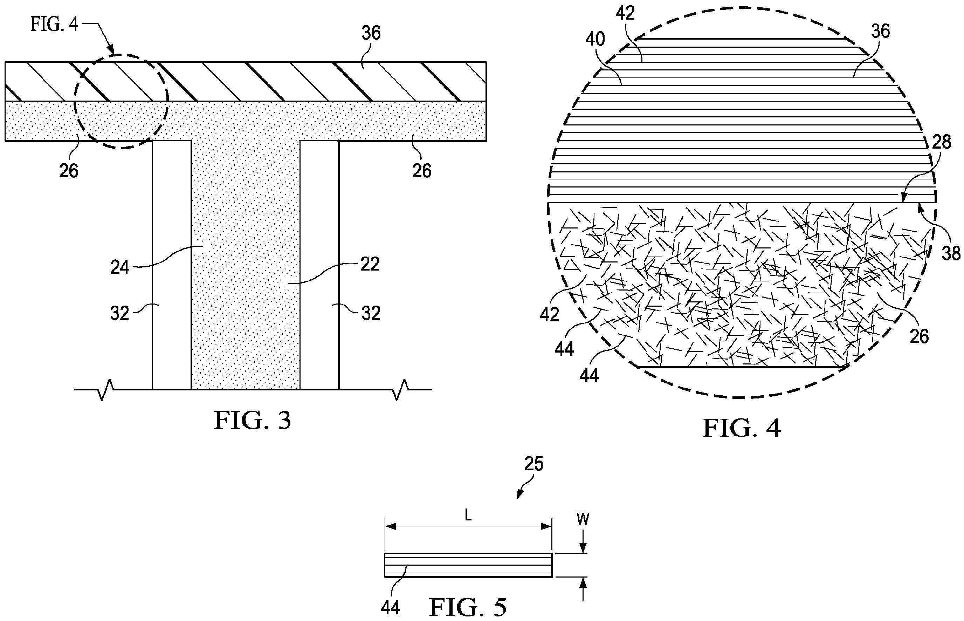

Referring now also to Figure 3, each of the flanges 26 of the unitary beam 22 is formed integral with both the web 24 and the lugs 32. The flanges 26 and the web 24 form a continuous T-shaped cross-section that is devoid of cavities or gaps that may require a filler. As shown in Figure 4, the beam 22 is formed of a molded thermoplastic resin 42 that is reinforced with dispersed, randomly oriented, discontinuous fibers 44. Each of the TPC laminate caps 36 is formed by multiple lamina comprising thermoplastic resin 42 that is reinforced with continuous fibers 40 having any desired orientation or combination of orientations according to a predetermined ply schedule (not shown). The first and second components 22, 36 (beam 22 and caps 36) are co-welded along corresponding faying surfaces 28, 38. Co-welding may be achieved using any of several techniques that will be discussed below in more detail.

Referring to Figures 4 and 5, the beam 22 is produced by compression molding, in which a charge (not shown) of thermoplastic prepreg fiber flakes 25 is introduced into a mold cavity (not shown) having the shape of the beam 22. The charge is heated to the melt temperature of the thermoplastic resin until the resin in the flakes 25 melts and becomes flowable, forming a flowable mixture of a thermoplastic resin and discontinuous, randomly oriented fibers. The flowable mixture is compressed to fill the mold cavity and then quickly cooled and removed from the mold. As used herein, "flakes" "TPC flakes" and "fiber flakes" refer to individual pieces, fragments, slices, layers or masses of thermoplastic resin that contain fibers suitable for reinforcing the beam 22.

In the embodiment illustrated in Figure 5, each of the fiber flakes 25 has a generally rectangular, long thin shape in which the reinforcing fibers 44 have the substantially same length **L** and a width **W.** In other embodiments however, the fiber flakes 25 may have other shapes, and the reinforcing fibers 44 may vary in length **L.** The presence of fibers 44 having differing lengths may aid in achieving a more uniform distribution of the fiber flakes 25 in the beam 22, while promoting isotropic mechanical properties and/or strengthening the beam 22. In some embodiments, the mold charge may comprise a mixture of TPC flakes 25 having differing sizes and/or shapes. The fiber flakes 25 may be "fresh" flakes produced by chopping bulk prepreg tape to the desired size and shape. Alternatively, the fiber flakes 25 may be "recycled" flakes that are produced by chopping scrap prepreg TPC material to the desired size and shape.

The thermoplastic resin which forms part of the flakes 25 may comprise a relatively high viscosity thermoplastic resin such as, without limitation, PEI (polyetherimide) PPS (polyphenylene sulphide), PES (polyethersulfone), PEEK (polyetheretherketone), PEKK (polyetheretherketone), and PEKK-FC (polyetherketoneketone-fc grade), to name only a few. The reinforcing fibers 44 in the flakes 25 may be any of a variety of high strength fibers, such as, without limitation, carbon, metal, ceramic and/or glass fibers.

The TPC laminate caps 36 may be produced using any of a variety of techniques. For example, the cap 36 may be laid up by hand by stacking plies of fiber prepreg having desired fiber orientations according to a predetermined ply schedule. In one embodiment, the ply stack may be consolidated, trimmed to the desired dimensions and then placed on the flanges 26, following which the caps 36 is co-welded with the flanges 26. The placement of the consolidated ply stack on the flange 26 may be performed by hand, or using a pick-and-place machine (not shown). In another embodiment, a ply stack may be formed directly on the flange 26 and then consolidated by placing the structure 20 in a mold, compressing the flanges 26 and the caps 36 together and heating the ply stack to the melt temperature of the resin. The necessary heating may be achieved using a self-heated mold, or by placing the mold within an oven. The simultaneous heating of both the ply stack and flanges 26 results in melting of the resin at the faying surfaces 28, 38 (Figure 4) thereby co-welding the caps 36 and flanges 26. It should be noted here that any of a variety of other techniques may be used to melt the thermoplastic resin at the faying surfaces 28, 38, thereby co-welding the caps 36 and the flanges 26, including but not limited to laser welding, ultrasonic welding, induction welding and resistance welding, to name only a few.

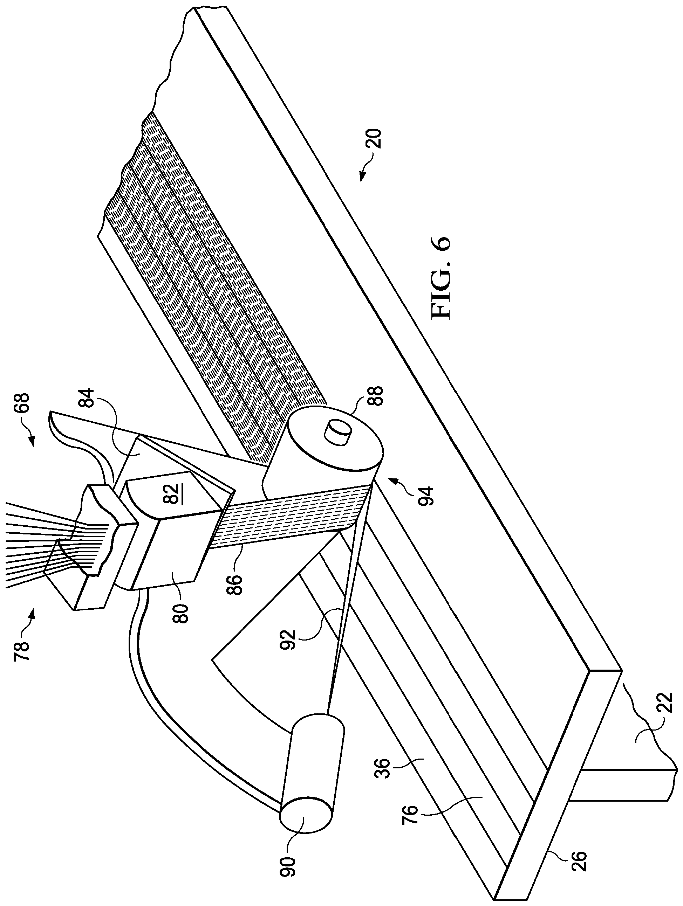

It may be also possible to layup the cap 36 *in situ* using automatic fiber placement (AFP) equipment to form the lamina (composite plies) of the cap 36, either on a layup tool (not shown) or directly on the flanges 26. A typical AFP machine 68 suitable for laying up the caps 36 is shown in Figure 6. In the illustrated example, the AFP machine 68 is used as an end effecter on a manipulator (not shown) to layup the lamina of the cap 36 directly on the flanges 26.

The AFP machine 68 is computer numerically controlled and includes combs 80 that guide incoming prepreg tows 78 (or tape strips) into a ribbonizer 82 which arranges the tows 78 side-by-side into a bandwidth 86 of prepreg fiber material. A tow cutter 84 cuts the bandwidth 86 to a desired length. The bandwidth 86 passes beneath a compliant roller 88 that applies and compacts the bandwidth 86 onto the flange 26, or onto an underlying ply that has already been placed on the flange 26. The bandwidths 86 are laid down in parallel courses 76 of thermoplastic prepreg tape or prepreg tows 78 to form the individual plies or lamina of the cap 36. The courses 76 are laid down with fiber orientations at preselected angles relative to a reference direction, according to a predetermined ply schedule. In the illustrated example, the courses 76 of the ply being formed have fiber orientations of 0 degrees. Optionally, a laser 90 or similar heat source such as a hot gas torch, an ultrasonic torch or an infrared source, may be mounted on the AFP machine 68 for heating and melting the faying surfaces 28, 38 (Figure 4) of the flange 26 and the cap 36. The laser 90 projects a beam 92 which impinges on both the flange 26 and the bandwidth 86 of the tows 78 in the area 94 where the bandwidth 86 is being laid down on the flange 72. The beam 92 melts the resin in both the tows 78 and a layer of the underlying of the flange 26, thereby co-welding the cap 36 and the flange 26 "on-the-fly".

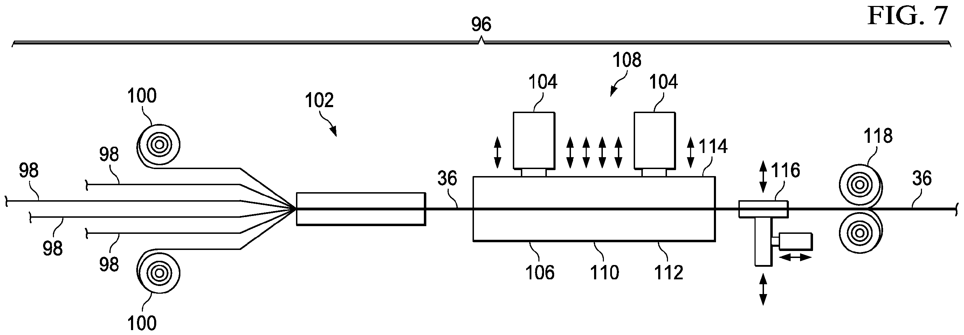

In another embodiment, the TPC laminate caps 70 containing continuous fiber reinforcement may be produced using a continuous compression molding (CCM) machine shown in Figure 7. The CCM machine 96 broadly comprises a pre-forming zone 102 and a consolidation zone 108. In the pre-forming zone 102, plies 98 of fiber reinforced thermoplastic material are loaded in their proper orientations into a ply stack, and combined with tooling 100.

The stack of plies 98 are fed, along with the tooling 100, into the pre-forming zone 102 where they are preformed to the general shape of the cap 36 at an elevated temperature. The pre-formed cap 36 then exits the pre-forming zone 102 and enters the consolidation zone 108, where it is consolidated to form a single, integrated TPC laminate cap 36. The elevated temperature used to pre-forming the cap 36 is sufficiently high to cause softening of the plies 98 so that the plies 98 may be bent, if desired, during the pre-forming process.

The preformed cap 36 enters a separate or connected consolidating structure 104 within the consolidation zone 108. The consolidating structure 104 includes a plurality of standardized tooling dies generally indicated at 114 that are individually mated with the tooling 100. The consolidating structure 104 has a pulsating structure 116 that incrementally moves the preformed cap 36 forward within the consolidation zone 108 and away from the pre-forming zone 102. As the cap 36 moves forward, the cap 36 first enters a heating zone 106 that heats the cap 36 to a temperature which allows the free flow of the polymeric component of the matrix resin of the plies 98.

Next, the cap 36 moves forward to a pressing zone 110, wherein standardized dies 114 are brought down collectively or individually at a predefined force (pressure) sufficient to consolidate (i.e. allow free flow of the matrix resin) the plies 98 into its desired shape and thickness. Each die 114 may be formed having a plurality of different temperature zones with insulators. The dies 114 are opened, and the cap 36 is advanced within the consolidating structure 104 away from the pre-forming zone 102. The dies 114 are then closed again, allowing a portion of the preformed cap 36 to be compressed under force within a different temperature zone. The process is repeated for each temperature zone of the die 114 as the preformed cap 36 is incrementally advanced toward a cooling zone 112.

In the cooling zone 112, the temperature of the formed and shaped cap 36 may be brought below the free flowing temperature of the matrix resin of the plies 98, thereby causing the fused or consolidated cap 36 to harden to its ultimate pressed shape. The fully formed and consolidated cap 36 then exits the consolidating structure 104, where the tooling members 100 may be collected at 118.

The CCM machine 96 described above may be particularly suitable for producing caps 36 or similar components have one or more curves or contours along their lengths, however other techniques may be used to produce TPC laminate caps 36 with continuous fiber reinforcement, including but not limited to pultrusion or roll forming.

As previously mentioned the hybrid composite structure 20 produced according to the disclosed method may include one or more curvatures or contours.

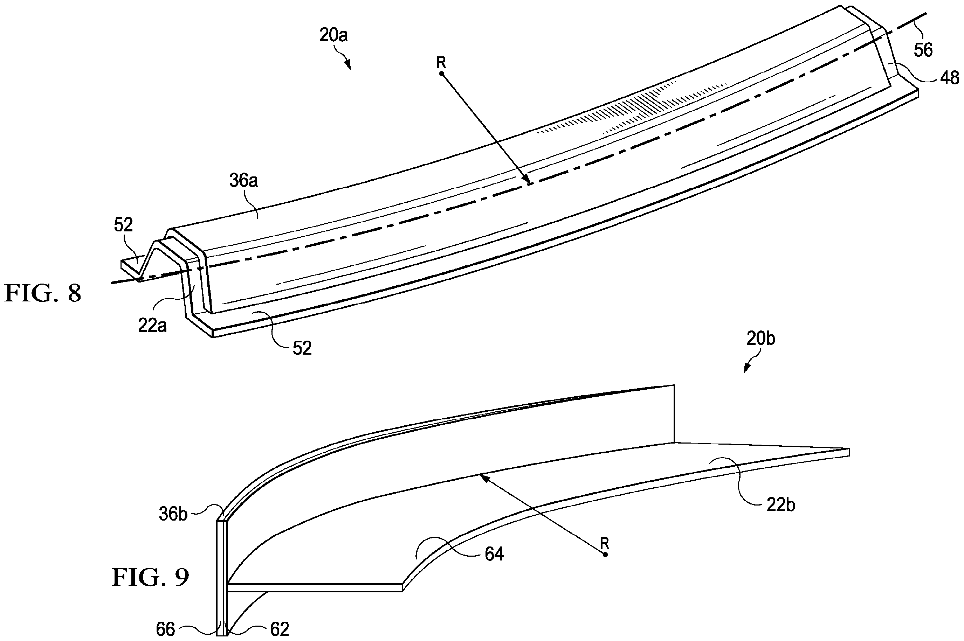

Figure 8 shows a composite structure 20 corresponding to a hat stringer 20a that is not in the scope of the appended claims. The hat stringer 20a comprises a first component 22a formed of a thermoplastic resin reinforced with discontinuous, randomly oriented fibers, and a second component 36a formed of a thermoplastic resin reinforced with continuous fibers. The first component 22a includes a hat shaped section 48 and outwardly extending flanges 52. The second component 36a is hat shaped in cross-section. The hat shaped second component 36a covers and is co-welded with the hat shaped section 48. Both the first and second components, 22a, 36a have a common longitudinal axis 56 that is curved along a radius **R**.

Figure 9 illustrates another example of a hybrid composite structure 20b that is not in the scope of the appended claims. The composite structure 20b comprises a first molded TPC component 22b and a second TPC laminate component 36b which are each curved along a radius **R**. The first component 22b, which has a T-shaped cross-section, is formed from a thermoplastic resin reinforced with randomly oriented, discontinuous fibers, and comprises a flange 62 integrally formed with a central web 64. The second component 36b of the composite structure 20b is a laminate formed from a thermoplastic resin reinforced with continuous fibers of desired orientations, and comprises a cap 66 co-welded with the flange 62.

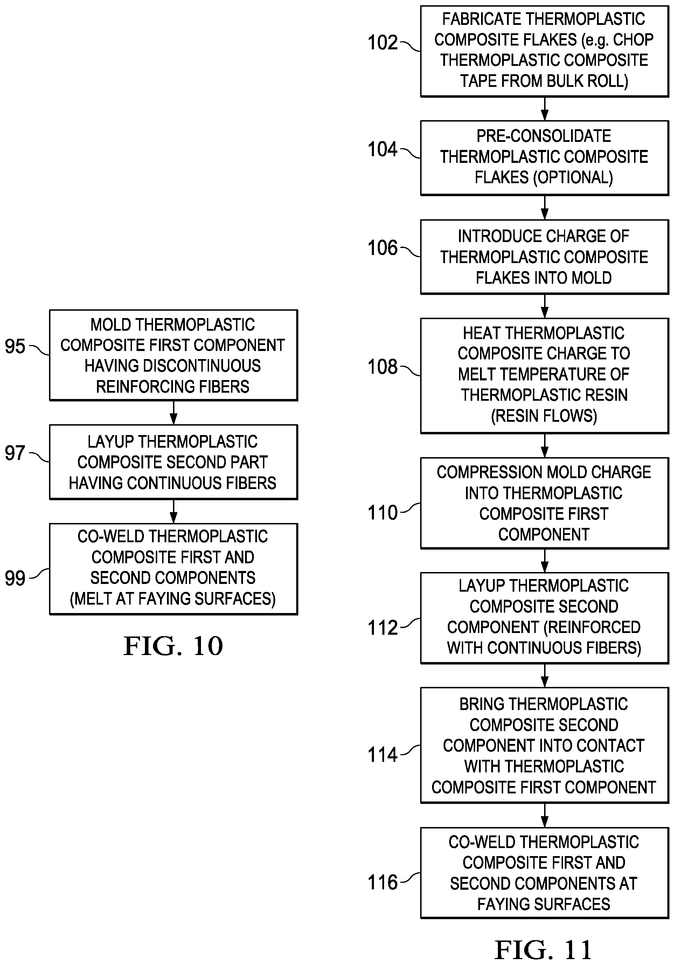

Figure 10 broadly illustrates the overall steps of a method of producing a hybrid composite structure 20 of the type previously described. At step 95, a TPC first component 22 is molded which has discontinuous reinforcing fibers. At step 97, a TPC second component 36 is laid up which has continuous reinforcing fibers. At step 99, the TPC first and second components 22, 36 are co-welded by melting the two components 22, 36 along their respective faying surfaces 28, 38.

Figure 11 broadly illustrates the overall steps of a method of producing a hybrid composite structure 20, such as the composite beam shown in Figures 1 and 2. Beginning at 102, thermoplastic fiber prepreg flakes 25 are fabricated, and as by chopping TPC tape from a bulk roll. At 104, optionally, the TPC fiber flakes 25 may be preconsolidated by heating and compressing them. At 106, a charge of the TPC fiber flakes 25 is introduced into a mold. At 108, the TPC fiber charge is heated to the melt temperature of the thermoplastic resin in the flakes 25, resulting in the resin becoming flowable and filling the mold. At 110, the mold charge is compressed and molded into the TPC first component 22. At 112, the TPC second component 36, which is reinforced with continuous fibers, is laid up using any of the techniques discussed previously. At 114, the TPC first and second components 22, 36 are brought into contact along their respective faying surfaces 38, 28. At 116, the TPC first and second components 22, 36 are co-welded along their respective faying surfaces 38, 28.

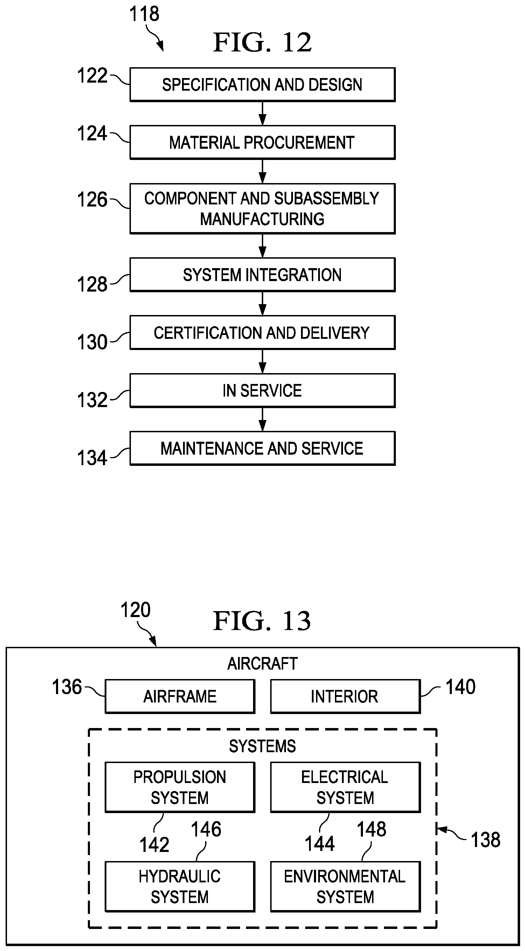

Embodiments of the disclosure find use in the aerospace where composite structural members, such as beams, stringers and stiffeners, may be used. Thus, referring now to Figures 12 and 13, embodiments of the disclosure are used in the context of an aircraft manufacturing and service method 118 as shown in Figure 12 and an aircraft 120 as shown in Figure 13. Aircraft applications of the disclosed embodiments may include, for example, without limitation, floor beams, spars, ribs, frame sections, stiffeners and other composite structural members. During pre-production, exemplary method 118 may include specification and design 122 of the aircraft 120 and material procurement 124. During production, component and subassembly manufacturing 126 and system integration 128 of the aircraft 120 takes place. Thereafter, the aircraft 120 may go through certification and delivery 130 in order to be placed in service 132. While in service by a customer, the aircraft 120 is scheduled for routine maintenance and service 134, which may also include modification, reconfiguration, refurbishment, and so on.

Each of the processes of method 118 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in Figure 13, the aircraft 120 produced by exemplary method 118 may include an airframe 136 with a plurality of systems 138 and an interior 140. Examples of high-level systems 138 include one or more of a propulsion system 142, an electrical system 144, a hydraulic system 146 and an environmental system 148. Any number of other systems may be included.

Systems and methods embodied herein may be employed during any one or more of the stages of the production and service method 118. For example, components or subassemblies corresponding to production process 126 may be fabricated or manufactured in a manner similar to components or subassemblies produced while the aircraft 120 is in service. Also, one or more apparatus embodiments, method embodiments, or a combination thereof may be utilized during the production stages 126 and 128, for example, by substantially expediting assembly of or reducing the cost of an aircraft 120. Similarly, one or more of apparatus embodiments, method embodiments, or a combination thereof may be utilized while the aircraft 120 is in service, for example and without limitation, to maintenance and service 134.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different advantages as compared to other illustrative embodiments. The embodiment or embodiments selected are chosen and described in order to best explain the principles of the embodiments, the practical application, and to enable others of ordinary skill in the art to understand the disclosure for various embodiments with various modifications without departing from the scope of the appended claims.

## Claims

1. A method of manufacturing a composite aerospace structural member (20) comprising a unitary beam (22) that includes a central web (24), a pair of flanges (26) integral with the central web and forming an I-shaped cross-section, a laminated composite cap (36) that covers and is co-welded to each of the pair of flanges, and a pair of fittings on opposite ends of the unitary beam that are formed integral with the web and the pair of flanges, wherein the method comprises:
molding a thermoplastic resin first component (22) reinforced with discontinuous fibers by compression molding a flowable mixture of a thermoplastic resin (42) and discontinuous, randomly oriented fibers (40), wherein the thermoplastic resin first component comprises the unitary beam;
laying up a thermoplastic resin second component (36) reinforced with substantially continuous fibers (44), wherein the thermoplastic resin second component comprises the laminated composite caps; and
co-welding the thermoplastic resin first and second components.

2. The method of claim 1, wherein the compression molding includes:
placing a charge of thermoplastic prepreg flakes (25) in a mold,
forming a flowable mixture of a resin and fibers by melting the thermoplastic resin in the prepreg flakes, and
compressing the flowable mixture within the mold; and
wherein the substantially continuous fibers (44) in the flakes comprise carbon, metal, ceramic and/or glass fibers.

3. The method of claim 2, wherein:
the compression molding includes cooling the thermoplastic resin first component after it has been molded, and
co-welding the thermoplastic resin first and second components includes heating the thermoplastic resin first and second components to a melt temperature of thermoplastic resin in the thermoplastic resin first and second component.

4. The method of claim 1, wherein the co-welding is performed by:
assembling the thermoplastic resin first and second components together along faying surfaces (28, 38) of the thermoplastic resin first and second components, and
melting the faying surfaces.

5. The method of claim 4, wherein melting the faying surfaces is performed by placing the assembled thermoplastic resin first and second components in an oven.

6. The method of claim 1, further comprising:
consolidating the thermoplastic resin second component before the co-welding is performed.

7. The method of claim 1, wherein:
laying up the thermoplastic resin second component is performed by laying up plies on each of the pair of flanges of the thermoplastic resin first component, and
the co-welding is performed as the thermoplastic resin second component is being laid up on the surface of the thermoplastic resin first component.

8. The method of claim 7, wherein the co-welding is performed by locally melting faying surfaces of the thermoplastic resin first and second components as the thermoplastic resin second component is being laid up on both of the pair of flanges of the thermoplastic resin first component.

9. The method of claim 1, wherein:
laying up the thermoplastic resin second component is performed by laying up a ply stack directly on each of the pair of flanges of the thermoplastic resin first component and the method further comprises consolidating the ply stack by placing the structural member in a mold, compressing the pair of flanges and the caps together, and heating the ply stack to the melt temperature of the thermoplastic resin.

10. The method of claim 9, wherein laying up thermoplastic resin second component is performed using automatic fiber placement equipment.

11. A hybrid composite aerospace structural member (20), comprising:
a first thermoplastic resin component reinforced with discontinuous fibers comprising a compression molded unitary beam (22) that includes a central web (24), a pair of flanges (26) integral with the central web, forming an I-shaped cross-section and a pair of fittings on opposite ends of the unitary beam that are formed integral with the central web and the pair of flanges; and
a second thermoplastic resin component reinforced with continuous fibers (44) and comprising a laminated composite cap (36) that covers and is co-welded to each of the pair of flanges.

12. The hybrid composite aerospace structural member of claim 11, wherein the discontinuous fibers comprise carbon, metal, ceramic and/or glass fibers.

## Patentansprüche

1. Verfahren zur Herstellung eines Verbundbauteils (20) für die Luft- und Raumfahrt, das einen einstückigen Träger (22) umfasst, der einen zentralen Steg (24), ein Paar Flansche (26), die mit dem zentralen Steg einstückig sind und einen I-förmigen Querschnitt bilden, eine laminierte Verbundkappe (36), die jeden der beiden Flansche bedeckt und mit ihm gemeinsam verschweißt ist, und ein Paar Anschlussstücke an gegenüberliegenden Enden des einstückigen Trägers umfasst, die einstückig mit dem Steg und dem Paar Flansche ausgebildet sind, wobei das Verfahren umfasst:
Formen einer ersten Komponente (22) aus thermoplastischem Harz, die mit diskontinuierlichen Fasern verstärkt ist, durch Formpressen einer fließfähigen Mischung aus einem thermoplastischen Harz (42) und diskontinuierlichen, willkürlich ausgerichteten Fasern (40), wobei die erste Komponente aus thermoplastischem Harz den einteiligen Träger umfasst;
Aufschichten einer zweiten Komponente aus thermoplastischem Harz (36), die mit im Wesentlichen kontinuierlichen Fasern (44) verstärkt ist, wobei die zweite Komponente aus thermoplastischem Harz die laminierten Verbundkappen umfasst; und
gemeinsames Verschweißen der ersten und zweiten Komponente aus thermoplastischem Harz.

2. Verfahren nach Anspruch 1, wobei das Formpressen umfasst:
Einbringen einer Charge von thermoplastischen Prepreg-Flocken (25) in eine Form,
Bilden einer fließfähigen Mischung aus einem Harz und Fasern durch Schmelzen des thermoplastischen Harzes in den Prepreg-Flocken, und
Komprimieren der fließfähigen Mischung innerhalb der Form; und
wobei die im Wesentlichen kontinuierlichen Fasern (44) in den Flocken Kohlenstoff-, Metall-, Keramik- und/oder Glasfasern umfassen.

3. Verfahren nach Anspruch 2, bei dem:
das Formpressen das Abkühlen der ersten thermoplastischen Harzkomponente einschließt, nachdem sie geformt worden ist, und
das gemeinsame Verschweißen der ersten und zweiten Komponente aus thermoplastischem Harz das Erhitzen der ersten und der zweiten Komponente aus thermoplastischem Harz auf eine Schmelztemperatur des thermoplastischen Harzes in der ersten und zweiten Komponente aus thermoplastischem Harz umfasst.

4. Verfahren nach Anspruch 1, bei dem das gemeinsame Verschweißen durchgeführt wird durch:
Zusammenfügen der ersten und zweiten Komponente aus thermoplastischem Harz entlang der Fügeflächen (28, 38) der ersten und zweiten Komponente aus thermoplastischem Harz, und
Schmelzen der Fügeflächen.

5. Verfahren nach Anspruch 4, bei dem das Schmelzen der Fügeflächen durchgeführt wird, indem die zusammengesetzten ersten und zweiten Komponenten aus thermoplastischem Harz in einen Ofen gelegt werden.

6. Verfahren nach Anspruch 1, das ferner umfasst
Verfestigen der zweiten Komponente aus thermoplastischem Harz, bevor das gemeinsame Verschweißen durchgeführt wird.

7. Verfahren nach Anspruch 1, bei dem:
das Aufschichten der zweiten thermoplastischen Harzkomponente durch Aufschichten von Lagen auf jedem der beiden Flansche der ersten thermoplastischen Harzkomponente durchgeführt wird, und
das gemeinsame Verschweißen durchgeführt wird, während die zweite thermoplastische Harzkomponente auf die Oberfläche der ersten thermoplastischen Harzkomponente aufgelegt ist.

8. Verfahren nach Anspruch 7, bei dem das gemeinsame Verschweißen durch lokales Schmelzen der Fügeflächen der ersten und der zweiten thermoplastischen Harzkomponente durchgeführt wird, während die zweite thermoplastische Harzkomponente auf beide Flansche des Paars der ersten thermoplastischen Harzkomponente aufgelegt ist.

9. Verfahren nach Anspruch 1, bei dem:
das Aufschichten der zweiten Komponente aus thermoplastischem Harz durch Aufschichten eines Lagenstapels direkt auf jeden der beiden Flansche der ersten Komponente aus thermoplastischem Harz durchgeführt wird und das Verfahren ferner das Verfestigen des Lagenstapels durch Einlegen des Bauteils in eine Form, Zusammendrücken der beiden Flansche und der Kappen und Erhitzen des Lagenstapels auf die Schmelztemperatur des thermoplastischen Harzes umfasst.

10. Verfahren nach Anspruch 9, bei dem das Aufschichten der zweiten Komponente aus thermoplastischem Harz unter Verwendung einer automatischen Faserplatzierungsanlage durchgeführt wird.

11. Hybrid-Verbundbauteil für die Luft- und Raumfahrt (20), umfassend:
ein erstes Bauteil aus thermoplastischem Harz, das mit diskontinuierlichen Fasern verstärkt ist und einen formgepressten einheitlichen Träger (22) umfasst, der einen Mittelsteg (24), ein Paar Flansche (26), die mit dem Mittelsteg einstückig sind und einen I-förmigen Querschnitt bilden, und ein Paar Anschlussstücke an gegenüberliegenden Enden des einheitlichen Trägers umfasst, die einstückig mit dem Mittelsteg und dem Paar Flansche ausgebildet sind; und
ein zweites Bauteil aus thermoplastischem Harz, das mit Endlosfasern (44) verstärkt ist und eine laminierte Verbundkappe (36) umfasst, die jeden der beiden Flansche abdeckt und mit ihm verschweißt ist.

12. Hybrid-Verbundbauteil für die Luft- und Raumfahrt nach Anspruch 11, bei dem die diskontinuierlichen Fasern Kohlenstoff, Metall, Keramik und/oder Glasfaser umfassen.

## Revendications

1. Procédé de fabrication d'un élément structurel aérospatial composite (20) comprenant une poutre unitaire (22) qui comprend une âme centrale (24), une paire de brides (26) solidaires de l'âme centrale et formant une section transversale en forme de I, une coiffe composite stratifiée (36) qui recouvre et est soudée conjointement à chacune de la paire de brides, et une paire de raccords sur des extrémités opposées de la poutre unitaire qui sont formés solidaires de l'âme et de la paire de brides, dans lequel le procédé comprend les étapes consistant à :
mouler un premier composant de résine thermoplastique (22) renforcé avec des fibres discontinues par moulage par compression d'un mélange fluide d'une résine thermoplastique (42) et de fibres discontinues orientées de manière aléatoire (40), dans lequel le premier composant de résine thermoplastique comprend la poutre unitaire ;
confectionner un second composant de résine thermoplastique (36) renforcé avec des fibres sensiblement continues (44), dans lequel le second composant de résine thermoplastique comprend les coiffes composites stratifiées ; et
souder conjointement les premier et second composants de résine thermoplastique.

2. Procédé selon la revendication 1, dans lequel le moulage par compression comprend :
placer une charge de flocons préimprégnés thermoplastiques (25) dans un moule,
former un mélange fluide d'une résine et de fibres en faisant fondre la résine thermoplastique dans les flocons préimprégnés, et
comprimer le mélange fluide à l'intérieur du moule ; et
dans lequel les fibres sensiblement continues (44) dans les flocons comprennent des fibres de carbone, de métal, de céramique et/ou de verre.

3. Procédé selon la revendication 2, dans lequel :
le moulage par compression comprend le refroidissement du premier composant de résine thermoplastique après qu'il ait été moulé, et
le soudage conjoint des premier et second composants de résine thermoplastique comprend un chauffage des premier et second composants de résine thermoplastique à une température de fusion de la résine thermoplastique dans les premier et second composants de résine thermoplastique.

4. Procédé selon la revendication 1, dans lequel le soudage conjoint est effectué en :
assemblant les premier et second composants de résine thermoplastique ensemble le long de surfaces de contact (28, 38) des premier et second composants de résine thermoplastique, et
faisant fondre les surfaces de contact.

5. Procédé selon la revendication 4, dans lequel la fusion des surfaces de contact est effectuée en plaçant les premier et second composants de résine thermoplastique assemblés dans un four.

6. Procédé selon la revendication 1, comprenant en outre l'étape consistant à :
consolider le second composant de résine thermoplastique avant que le soudage conjoint ne soit effectué.

7. Procédé selon la revendication 1, dans lequel :
la confection du second composant de résine thermoplastique est effectuée en confectionnant des couches sur chacune de la paire de brides du premier composant de résine thermoplastique, et
le soudage conjoint est effectué lorsque le second composant de résine thermoplastique est mis en place sur la surface du premier composant de résine thermoplastique.

8. Procédé selon la revendication 7, dans lequel le souage conjoint est effectué en faisant fondre localement des surfaces de contact des premier et second composants de résine thermoplastique lorsque le second composant de résine thermoplastique est confectionné sur les deux de la paire de brides du premier composant de résine thermoplastique.

9. Procédé selon la revendication 1, dans lequel :
la confection du second composant de résine thermoplastique est effectuée en confectionnant un empilement de couches directement sur chacune de la paire de brides du premier composant de résine thermoplastique et le procédé comprend en outre une consolidation de l'empilement de couches en plaçant l'élément structurel dans un moule, en comprimant la paire de brides et les coiffes ensemble, et en chauffant l'empilement de couches à la température de fusion de la résine thermoplastique.

10. Procédé selon la revendication 9, dans lequel la confection du second composant de résine thermoplastique est effectuée en utilisant un équipement de placement automatique de fibres.

11. Élément structurel aérospatial composite hybride (20), comprenant :
un premier composant de résine thermoplastique renforcé par des fibres discontinues comprenant une poutre unitaire moulée par compression (22) qui comprend une âme centrale (24), une paire de brides (26) solidaires de l'âme centrale, formant une section transversale en forme de I et une paire de raccords sur des extrémités opposées de la poutre unitaire qui sont formés solidaires de l'âme centrale et de la paire de brides ; et
un second composant de résine thermoplastique renforcé par des fibres continues (44) et comprenant une coiffe composite stratifiée (36) qui recouvre et est soudé conjointement à chacune de la paire de brides.

12. Élément structurel aérospatial composite hybride selon la revendication 11, dans lequel les fibres discontinues comprennent des fibres de carbone, de métal, de céramique et/ou de verre.
